# EUROPÄISCHE PATENTSCHRIFT

(11) **EP 3 468 821 B1**
(45) Veröffentlichungstag und Bekanntmachung des Hinweises auf die Patenterteilung: **05.08.2020**
(21) Anmeldenummer: 17723307.9
(22) Anmeldetag: 02.05.2017
(51) Int. Cl.: B60K 1/04, B62D 21/15, B62D 29/00, B62D 25/02

(54) **STRUKTURBAUTEIL FÜR EIN KRAFTFAHRZEUG MIT VERSTÄRKUNGSELEMENT**
STRUCTURAL COMPONENT FOR A MOTOR VEHICLE HAVING A REINFORCING ELEMENT
PIÈCE STRUCTURALE POUR VÉHICULE À MOTEUR AVEC ÉLÉMENT DE RENFORT

(30) Priorität: 08.06.2016 DE 102016110578
(43) Veröffentlichungstag der Anmeldung: 17.04.2019
(73) Patentinhaber: Linde + Wiemann SE&Co. KG, Dillenburg 35683 (DE)
(72) Erfinder: SCHMIDT, Werner, 63755 Alzenau (DE); GEORG, Marcel, 57078 Siegen-Geisweid (DE)
(74) Vertreter: Müller, Eckhard
(86) Internationale Anmeldenummer: PCT/EP2017/060357
(87) Internationale Veröffentlichungsnummer: WO 2017/211502

(56) Entgegenhaltungen:
- EP-A1- 2 076 421
- DE-A1-102015 116 836
- US-A1- 2013 270 863
- US-A1- 2013 270 864

## Beschreibung

Die Erfindung betrifft ein Strukturbauteil für ein Kraftfahrzeug nach dem Oberbegriff des Anspruchs 1 sowie einen Strukturrahmen und einen Batteriekasten für ein Kraftfahrzeug.

In modernen Kraftfahrzeugen findet ein modularer Aufbau der einzelnen Kraftfahrzeugkomponenten mehr und mehr Einzug.

Hierbei werden Strukturbauteile an dem Kraftfahrzeug verbaut, welche aus einem wenigstens teilweise hohl ausgebildeten Profilsegment bestehen, und welche mit mehreren Befestigungsmitteln an der Kraftfahrzeugkarosserie angebracht werden. Diese Strukturbauteile bilden unter anderem den Teil von Crash-Strukturen, welche im Falle eines Unfalls für die Stabilität des Kraftfahrzeugs sorgen und welche die Einwirkungen eines Aufpralls von in dem Fahrzeug verborgenen Kraftfahrzeugkomponenten abhalten sollen.

Derartige Strukturbauteile verformen sich bei einem Aufprall, um die kinetische Energie, die bei dem Aufprall auf das Kraftfahrzeug einwirkt, durch die Umwandlung in Verformungsarbeit zu absorbieren.

Bei der Verwendung von Hohlprofilen für derartige Strukturbauteile kann es vorkommen, dass das Profil ab einer bestimmten Belastung kollabiert und bei einer weiteren Verformung nur noch wenig Verformungsarbeit geleistet werden kann. Zudem können das Profil durchsetzende Befestigungsmittel die Struktur des Strukturbauteils schwächen, weshalb Strukturbauteile mit Befestigungselementen grundsätzlich massiver ausgelegt werden müssen. Dies widerspricht jedoch Anforderungen hinsichtlich des Leichtbaus bei modernen Kraftfahrzeugen.

Aus der DE 10 2005 038 463 A1 ist ein Schweller in Schalenbauweise bekannt, wobei ein innenliegendes Verstärkungsprofil vorgesehen ist. Dieses Verstärkungsprofil ist zweischalig, wobei die beiden Schalen durch Verhakungsverbindungen in Form von Schraubbolzen miteinander verbunden sind, über welche für den Crashfall die Bewegung der Verstärkungsschalen zueinander eingestellt und begrenzt werden kann.

Aus der DE 10 2013 103 719 A1 ist ein Biegeträger bekannt, der seitlich an einer Tragstruktur befestigt ist, wobei die Befestigungsstellen, insbesondere Nietverbindungen, im Crashfall bei Durchbiegung eine Verschiebung gegenüber der Tragstruktur zulassen.

Aus der EP 2 076 421 A1 ist eine Fahrzeugvorderstruktur mit einem Verstärkungselement bekannt, welche die Verformung einer vorderen Säule des Fahrzeugs zum Zeitpunkt einer Kollision beschränken und die Effizienz der Übertragung der Kollisionslast verbessern soll. Hierzu weist die Fahrzeugvorderstruktur ein Strukturelement auf, das vor dem Fahrgastraum angeordnet ist und das sich in Fahrzeugquerrichtung erstreckt. Eine vordere Säule, die an jedem von zwei gegenüberliegenden Enden des Strukturelements in der Fahrzeugquerrichtung vorgesehen ist, erstreckt sich in einer Höhenrichtung des Fahrzeugs. Ferner ist eine Säulenstrebe mit einem am Fahrgastraum angeordneten ersten Endabschnitt und mit einem zweiten Endabschnitt, der an einer Außenseite des ersten Endabschnitts in der Fahrzeugquerrichtung vorgesehen ist.

Aus der US 2013/270863 A1 und der US 2013/270864 A1 ist ebenfalls ein Strukturbauteil für Kraftfahrzeuge als Aufprallschutz bekannt, welches eine Stützstruktur aufweist, sowie eine Innenschiene, die mit der Stützstruktur verbunden ist, und eine Außenschiene, die mit der Innenschiene verbunden ist. Aus der DE 10 2015 116836 A1 ist eine Radfängerbaugruppe bekannt, welche verhindern soll, dass sich ein Reifen in Richtung eines Fahrgastraums eines Fahrzeugs bewegt und sich dreht, wenn eine äußere Kraft auf das Fahrzeug ausgeübt wird. Die Radfängerbaugruppe umfasst eine Energieabsorptionsklammer und eine Platte. Die Energieabsorptionsklammer umfasst mehrere Erhöhungen und Vertiefungen, um dadurch ein Wellenformmerkmal zu definieren. Die Platte ist mit der Energieabsorptionsklammer an den Erhöhungen derart gekoppelt, dass eine äußere Kraft, die auf die Radfängerbaugruppe ausgeübt wird, von der Platte auf die Energieabsorptionsklammer übertragen werden kann, wodurch die Last an der Karosseriestruktur abgeschwächt wird.

Der Erfindung liegt daher die Aufgabe zugrunde, ein verbessertes Strukturbauteil anzugeben, welches trotz einer möglichen Schwächung durch Befestigungsmittel eine hohe Stabilität und Absorptionsfähigkeit gegenüber Verformungsenergie aufweist.

Die Aufgabe wird durch ein Strukturbauteil nach Anspruch 1 gelöst.

Danach wird ein Strukturbauteil für ein Kraftfahrzeug angegeben, welches ein wenigstens teilweise hohl ausgebildetes Profilsegment aufweist. Das Profilsegment ist über wenigstens zwei in einem Befestigungsabschnitt des Profilsegments angeordnete Befestigungsmittel mit einer Kraftfahrzeugkarosserie verbindbar. In dem Befestigungsabschnitt des Profilsegmentes ist zwischen einer seitlichen Aufprallfläche und den Befestigungsmitteln ein Verstärkungselement angeordnet, welches sich in Längsrichtung des Profilsegmentes erstreckt und sich bei einem Aufprall von der Aufprallfläche her seitlich an die Befestigungsmittel unter Aufnahme der Aufprallenergie wenigstens teilweise über eine Verschiebung der Befestigungsmittel anlegt.

Durch das Verstärkungselement wird eine gezielte Verstärkung des Strukturbauteils erreicht, die bewirkt, dass eine lokal auftretende Unfalleinwirkung, die auch Intrusion genannt wird, mittels des Verstärkungselementes über eine größere Länge des Strukturbauteils verteilt wird. Dabei legt sich das Verstärkungselement an mehrere Befestigungsmittel an und überträgt die durch den Aufprall eingeleitete Kraft auf diese Befestigungsmittel, so dass die Befestigungsmittel innerhalb des Profilsegmentes verschoben werden und dabei zusätzliche Verformungsenergie aufbringen.

Erfindungsgemäß sind die Befestigungsmittel als Hülsen ausgebildet, die sich zwischen einer Oberseite und einer Unterseite des Befestigungsabschnittes erstrecken und in dem Profilsegment im Wesentlichen formschlüssig gegen seitliches Verschieben gehalten sind. Derartige Befestigungshülsen erlauben eine einfache Schraubverbindung zwischen dem Strukturbauteil und der Fahrzeugkarosserie. Befestigungsschrauben können einfach durch die Hülse hindurch gesteckt und mit der Kraftfahrzeugkarosserie verschraubt werden. Um eine direkte Einwirkung der Schraubkraft auf das Profilsegment und dessen Querschnittsform zu vermeiden, stützen sich die Hülsen einerseits an dem Bolzen und andererseits an der Kraftfahrzeugkarosserie ab. Gegen ein seitliches Verschieben sind diese Hülsen formschlüssig in dem Profilsegment gehalten, so dass einerseits das Strukturbauteil sicher gehalten ist und andererseits im Falle eines Aufpralls unmittelbar Verformungsarbeit durch ein Verschieben der Hülsen innerhalb des Profilsegmentes aufgebracht werden kann.

Zudem kann vorgesehen sein, dass das Verstärkungselement im montierten Zustand an wenigstens einem Befestigungsmittel anliegt. Auf diese Weise kann erreicht werden, dass das Verstärkungselement zum einen im montierten Zustand bereits in einer Richtung, also in Richtung der Befestigungsmittel festgelegt ist, um Bewegungen während des regulären Betriebs zu vermeiden. Andererseits sorgt diese Ausgestaltung dafür, dass im Falle eines Aufpralls die auf das Verstärkungselement einwirkende Aufprallenergie unmittelbar auf die Befestigungsmittel übertragen wird, an denen das Verstärkungselement bereits im montierten Zustand anliegt.

Zudem kann vorteilhafterweise vorgesehen sein, dass das Verstärkungselement im montierten Zustand in einem Klemmbereich des Profilsegmentes kraftschlüssig und/oder formschlüssig festgelegt ist. Dies hat den Vorteil, dass während des regulären Betriebs gegebenenfalls auftretende Vibrationen und dadurch verursachte Geräusche erfolgreich vermindert oder vermieden werden können.

Alternativ kann das Verstärkungselement im montierten Zustand mit dem Profilsegment verschweißt sein. Eine Kombination aus Klemmung und Verschweißung ist ebenfalls möglich.

Vorteilhafter Weise kann zudem vorgesehen sein, dass das Verstärkungselement mit den Befestigungsmitteln zusammenwirkende Formschlussmittel aufweist, so dass im Falle eines Aufpralls und Eingriffs der Formschlussmittel in die Befestigungsmittel die Kraftkomponente in Längsrichtung des Profilsegmentes auf die Befestigungsmittel übertragbar ist. Dies hat den besonderen Vorteil, dass die von dem Verstärkungselement übertragenen Kräfte nicht nur in Richtung des eigentlichen Aufpralls auf die Befestigungsmittel übertragen werden. Es werden bei einer Verformung des Verstärkungselementes zudem Kraftkomponenten in Längsrichtung des Profilsegmentes auf die Befestigungsmittel übertragen und die Befestigungsmittel können somit auch in Querrichtung verschoben werden. Dies bewirkt das Aufnehmen zusätzlicher Verformungsenergie, da die Befestigungsmittel innerhalb des Profilsegmentes zueinander hin verschoben werden, wenn das Verstärkungselement sich unter der Einwirkung einer Verbiegung gleichzeitig verkürzt und die Formschlussmittel die Befestigungsmittel quer zur Aufprallrichtung verschieben.

In besonderer Ausgestaltung der Erfindung kann ferner vorgesehen sein, dass die Formschlussmittel Ausnehmungen, insbesondere kreissegmentartige Ausnehmungen oder Einbuchtungen in dem Verstärkungselement sind, die mit den Mantelflächen der Hülsen korrespondieren. Es hat sich herausgestellt, dass eine solche Ausgestaltung besonders einfach herzustellen und zu montieren ist. Zudem kann vorgesehen sein, dass das Verstärkungselement als Hohlprofil ausgebildet ist. Hierbei können verschiedene Profilformen vorgesehen werden. Beispielsweise kann das Verstärkungselement ein geschlossenes Rahmenprofil sein, welches beispielsweise durch Innenhochdruckformen umgeformt werden kann. Alternativ kann das Verstärkungselement als C-Profil ausgeführt sein, insbesondere als ein C-Profil mit Durchzug. Derartige Profile sind einfach herzustellen. Bei der Verwendung von Innenhochdruckumformverfahren lässt sich zudem über eine geeignete Wärmebehandlung eine gezielte Einstellung der Materialeigenschaften an bestimmten Stellen des Verstärkungselementes erreichen. Beispielhaft wird hier auf ein Herstellungsverfahren gemäß der WO 98/54370 A1 verwiesen, welches sich prinzipiell zum Herstellen des Verstärkungselementes eignet. Das Verstärkungselement kann jedoch auch aus einem kaltgewalzten Profil hergestellt sein, welches bereits ohne Wärmebehandlung die erforderliche Festigkeit aufweist.

In einer weiteren Ausgestaltung der Erfindung kann vorgesehen sein, dass die Ausnehmungen der Formschlussmittel durch Einbuchtungen in dem Hohlprofil gebildet sind. Derartige Einbuchtungen lassen sich besonders einfach nach Herstellung des Hohlprofils daran anbringen und ermöglichen eine kostengünstige und schnelle Herstellbarkeit.

Nach einer besonderen Ausgestaltung der Erfindung kann vorgesehen sein, das Verstärkungselement durch ein kaltgewalztes Profil zu bilden, wobei hier insbesondere ein hochfester Stahl als Material verwendet werden kann.

Bei der Verwendung von einem innenhochdruckgeformten Profil für das Verstärkungselement kann vorgesehen sein, dass das Verstärkungselement abschreckt und damit gehärtet ist. In einem solchem Fall wird das Verstärkungselement aus einem härtbaren Stahl gebildet und kann insbesondere nach dem zuvor genannten Herstellungsverfahren aus der WO 98/54370 A1 hergestellt werden.

Die zugrundeliegende Aufgabe wird ferner durch einen Strukturrahmen mit wenigstens zwei endseitig aneinander gefügten Strukturbauteilen gemäß der vorhergehenden Beschreibung gelöst, wobei die Verstärkungselemente der Strukturbauteile zum Übertragen von Kräften von einem Verstärkungselement auf das andere endseitig aneinander gefügt sind. Auf diese Weise kann die Gesamtstabilität eines aus dem oben beschriebenen Strukturbauteilen gebildeten Strukturrahmens noch weiter erhöht werden, da die von einem Verstärkungselement aufgenommene Verformungsenergie teilweise auf ein zweites Verstärkungselement übertragen und so insgesamt die wirksame Verformung über einen größeren Teil des Strukturrahmens verteilt werden kann.

Erfindungsgemäß ist vorgesehen, dass die Verstärkungselemente endseitig verprägte Rohrenden aufweisen und an den Rohrenden aneinander gefügt sind. Vorzugsweise sind die Rohrenden dabei derart gefügt, dass ein Verschieben der Rohrenden gegeneinander praktisch verhindert wird.

In Weiterbildung davon kann zudem vorgesehen sein, die Verstärkungselemente derart miteinander zu verbinden, dass auch ein Verdrehen der Rohrenden gegeneinander verhindert wird. Auf diese Weise kann noch mehr Verformungsarbeit von dem ersten Verstärkungselement auf das zweite Verstärkungselement übertragen werden.

Ferner kann vorgesehen sein, dass die Rohrenden stoffschlüssig oder durch wenigstens ein Verbindungsmittel aneinander gefügt sind. Als stoffschlüssige Verbindung eignet sich eine Schweißverbindung, wobei hier unterschiedliche Schweißverfahren angewendet werden können. Als Verbindungsmittel eignet sich ein sogenannter Pin, der durch eine in beide Rohrenden eingebrachte Bohrung hindurchgesteckt und darin vorzugsweise kraft- und/oder formschlüssig gehalten wird.

Die zugrundeliegende Aufgabe wird ferner durch einen Batteriekasten für ein Kraftfahrzeug mit einem Strukturrahmen nach vorhergehender Beschreibung gelöst.

Gerade in modernen Elektro- oder Hybridfahrzeugen ist die Verwendung eines erfindungsgemäßen Strukturbauteils für die Erstellung eines Strukturrahmens als Teil eines Batteriekastens besonders vorteilhaft, da die in dem Fahrzeug verbauten Batteriezellen besonders gut vor der Einwirkung von Intrusionen geschützt werden müssen. Hierfür ist der erfindungsgemäße Strukturrahmen mit den erfindungsgemäßen Strukturbauteilen besonders geeignet.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Dabei zeigen zum Teil schematisch:
- Figur 1: eine schematische Schnittansicht des erfindungsgemäßen Strukturbauteils,
- Figur 2: eine schematische Draufsicht auf ein erfindungsgemäßes Verstärkungselement,
- Figur 3: eine schematische Draufsicht auf ein erfindungsgemäßes Strukturbauteil,
- Figur 4: eine schematische Draufsicht auf ein erfindungsgemäßes Strukturbauteil gemäß einem zweiten Ausführungsbeispiel,
- Figur 5: eine schematische Schnittansicht des erfindungsgemäßen Strukturbauteils gemäß dem zweiten Ausführungsbeispiel,
- Figur 6: eine Draufsicht auf einen erfindungsgemäßen Strukturrahmen,
- Figur 7: eine Perspektivansicht auf einen Teil eines Profilsegmentes mit dem erfindungsgemäßen Verstärkungselement und zugehörigen Befestigungsmitteln,
- Figur 8: eine Perspektivansicht eines erfindungsgemäßen Verstärkungselementes mit erfindungsgemäßen Befestigungsmitteln,
- Figur 9: eine schematische Seitenansicht eines dritten Ausführungsbeispiels der Erfindung,
- Figur 10: eine schematische Seitenansicht eines vierten Ausführungsbeispiels der Erfindung,
- Figur 11: eine schematische Seitenansicht eines fünften Ausführungsbeispiels der Erfindung,
- Figur 12: eine Detailansicht gemäß dem ersten Ausführungsbeispiel der Erfindung,
- Figur 13: eine schematische Detailansicht gemäß eines abgewandelten ersten Ausführungsbeispiels,
- Figur 14: eine Draufsicht auf eine Detailansicht des ersten Ausführungsbeispiels,
- Figur 15: eine Draufsicht auf eine Detailansicht des zweiten Ausführungsbeispiels,
- Figur 16: eine Detailansicht einer endseitigen Fügestelle gemäß der Erfindung und
- Figur 17: eine Schnittdarstellung einer endseitigen Fügeverbindung der Rohrenden.

Gleiche oder gleichwirkende Bauteile werden in den nachfolgend dargestellten Figuren der Zeichnungen anhand mehrerer Ausführungsformen mit Bezugszeichen versehen, um die Lesbarkeit zu verbessern.

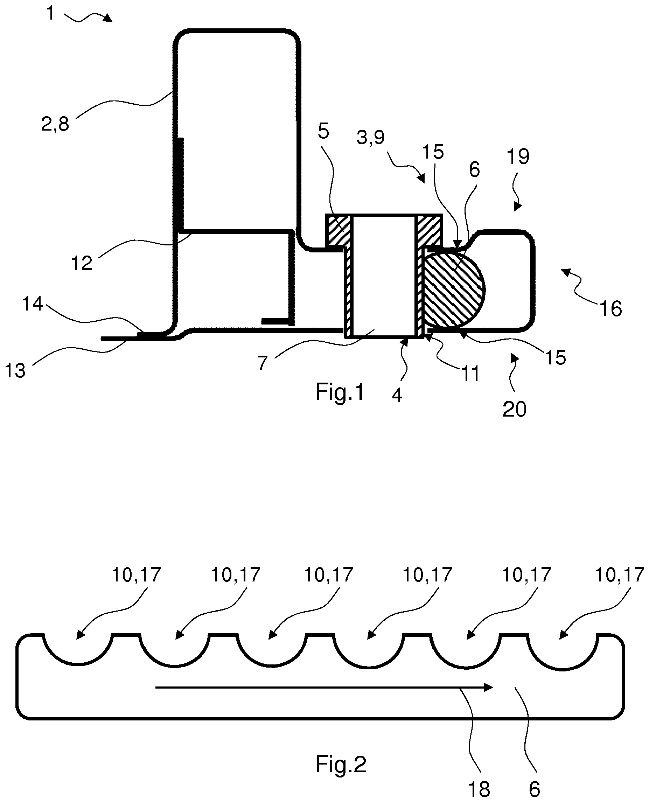

Figur 1 zeigt ein erfindungsgemäßes Strukturbauteil 1, welches ein Profilsegment 2 aufweist, das als Hohlprofil, hier in L-Form, ausgebildet ist. Selbstverständlich fallen auch andere Profilformen in den Bereich der Erfindung.

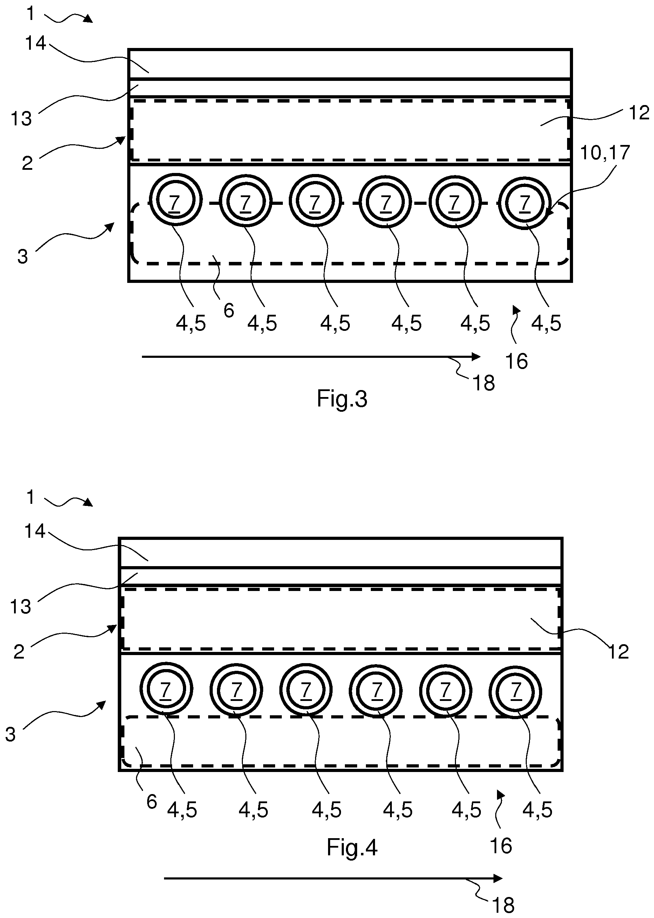

Das Profilsegment 2 weist einen Befestigungsabschnitt 3 auf, in welchem wenigstens zwei Befestigungsmittel 4 in Form von Hülsen 5 eingesetzt sind, wie in den Figuren 3 und 4 gezeigt ist. Die Hülsen dienen zur Aufnahme von Bolzen zur Verschraubung des Strukturbauteils 1 mit einer Kraftfahrzeugkarosserie. Die Hülsen 5 weisen Durchgangsbohrungen zur Aufnahme der Verschraubungsbolzen auf.

Am Ende eines horizontalen Schenkels 9 des Profilsegmentes 2 ist eine Aufprallfläche 16 gebildet, über welche ein Aufprall im Falle eines Unfalls auf das Strukturbauteil 1 wirkt. Zwischen der Aufprallfläche 16 und den Befestigungsmitteln 4 ist ein Verstärkungselement 6 angeordnet.

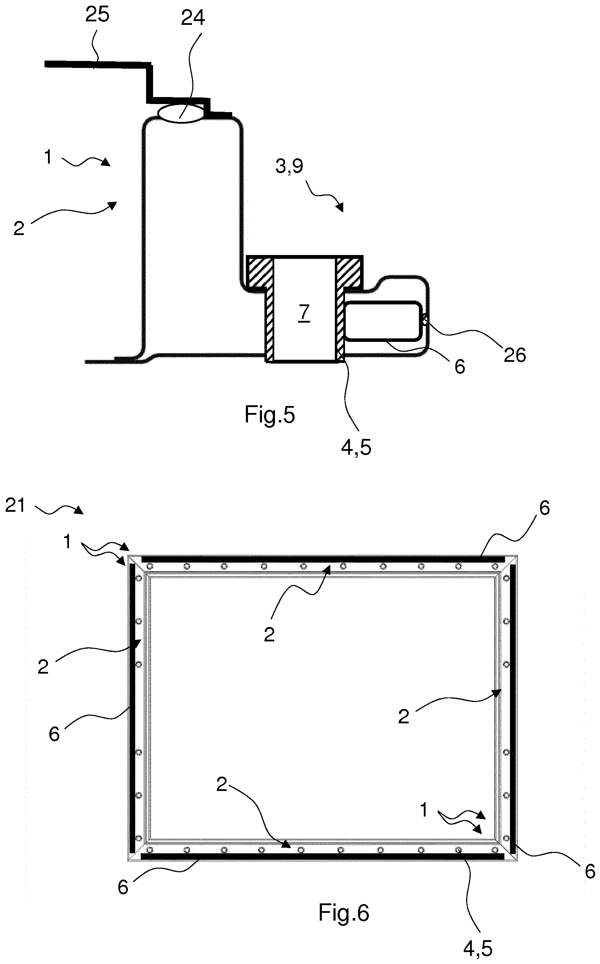

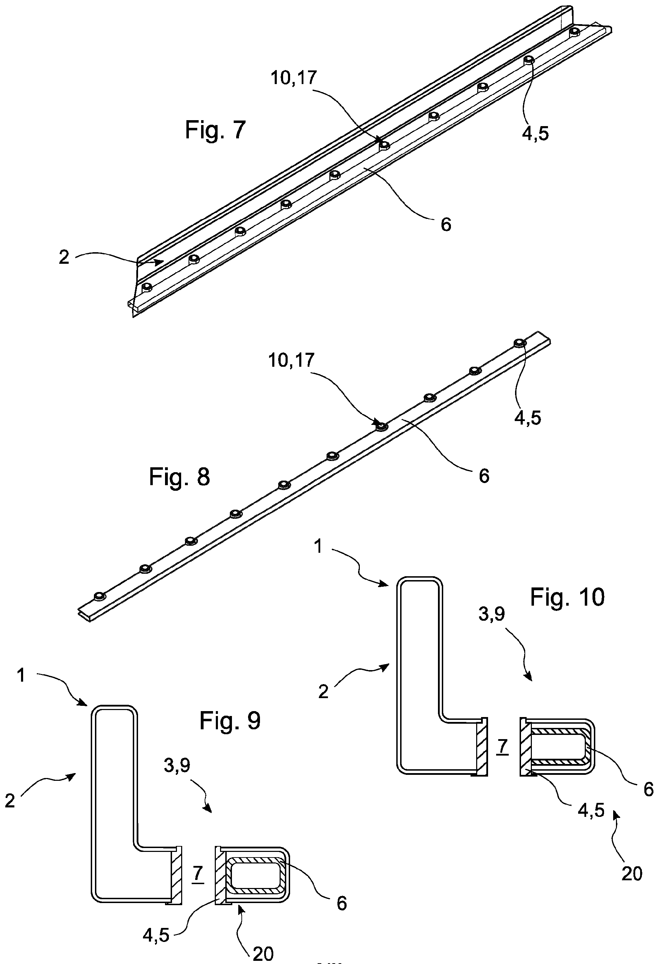

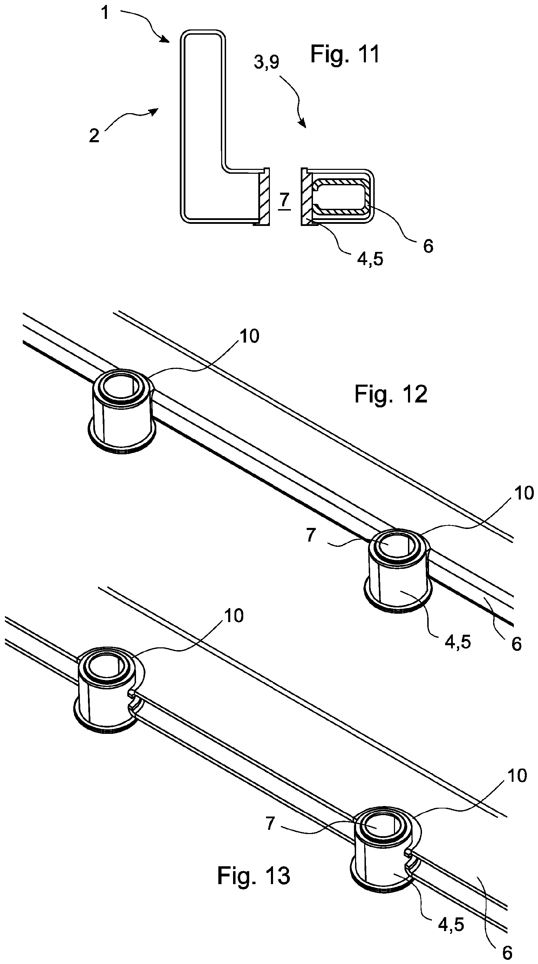

Das Verstärkungselement 6 ist als langgestrecktes Profilbauteil ausgebildet, welches sich in einer Längsrichtung 18 erstreckt. Es kann, wie in der Figur 1 gezeigt, als Kreisprofil ausgebildet sein, aber auch als Kastenprofil, vergleiche Figur 5 und Figur 9, C-Profil, vergleiche Figur 10 oder C-Profil mit Durchzug, vergleiche Figur 11. Andere Profilformen sind ebenfalls möglich.

Gemäß der ersten Ausführungsform weist das Verstärkungselement mehrere Formschlussmittel 10 in Form von Ausnehmungen 17 oder Einbuchtungen auf, welche mit Mantelflächen 11 der Befestigungsmittel 4 korrespondieren. Im montierten Zustand, wie dieser in der Figur 1 bspw. gezeigt ist, liegen die Formschlussmittel 10 bereits an den Mantelflächen 11 der Befestigungsmittel 4 an. Hierbei kann vorgesehen sein, dass das Verstärkungselement 6 bereits durch Formschlusseingriff der Formschlussmittel 10 an den Mantelflächen 11 festgelegt ist. Alternativ kann vorgesehen sein, dass das Verstärkungselement 6 über eine Klemmverbindung im Klemmbereich 15 innerhalb des horizontalen Schenkels 9 des L-Profils gehalten wird. In einer Variante gemäß der Figur 5 ist es zudem möglich, das Verstärkungselement 6 durch eine Schweißnaht 26 an dem Profilsegment 2 festzulegen. Kombinationen dieser Befestigungsvarianten sind ebenfalls möglich.

Im Falle eines Aufpralls von der Aufprallfläche 16 her in Richtung eines vertikalen Schenkels 8 des Profilsegmentes 2 legt sich das Verstärkungselement 6 an die Mantelflächen 11 der Befestigungsmittel 4 an und überträgt die auf das Verstärkungselement 6 einwirkende Kraft praktisch über die gesamte Länge in Richtung der Längsrichtung 18 auf die im Profilsegment 2 verteilt angeordneten Befestigungsmittel. Diese Anordnung der Befestigungsmittel ist in den Figuren 3 und 4 dargestellt. Durch die Verteilung der Kraft wird einerseits das Verstärkungselement 6 an einer Vielzahl von Punkten entlang der Längsrichtung 18 des Strukturbauteils 1 abgestützt. Andererseits erfolgt eine Verformung des Strukturbauteils 1 ebenfalls in einem größeren Bereich des Profilsegmentes entlang der Längsrichtung 18, da bei Verschiebung des Verstärkungselementes 6 mehrere Befestigungsmittel 4 innerhalb des Profilsegmenteses 2 verschoben werden und somit Verformungsarbeit leisten.

Wie aus der Figur 1 zudem entnehmbar ist, kann innerhalb des vertikalen Schenkels 8 ein Zusatzprofil 12 angeordnet sein, welches den strukturellen Aufbau des Strukturbauteils 1 weiter verstärkt. Bei dem Zusatzprofil 12 sind ebenfalls unterschiedliche Profilformen je nach Anwendungsfall möglich.

Das Profilsegment 2 ist in der vorliegenden Ausführungsform aus einem walzprofilierten Blechbauteil geformt, welches mehrfach umgebogen und dann an einer unteren Lasche und einer oberen Lasche 13, 14 zusammengefügt und geschlossen wird.

Diese Laschen dienen, wenn das Strukturbauteil 1 Teil eines Strukturrahmens 21 bildet, Auflageflächen für innerhalb des Strukturrahmens 21 anzuordnende Kraftfahrzeugkomponenten.

Um eine dauerhafte Belastung der Profilform mit der Befestigungskraft von Verbindungsschrauben zu entlasten, sind die Befestigungsmittel 4 als Hülsen 5 ausgebildet, die sich zwischen der Oberseite 19 und einer Unterseite 20 des horizontalen Schenkels 9 erstrecken. Auf diese Weise wird eine Presskraft, die von einem durch die Durchgangsbohrung 7 gesteckten Bolzen zum Befestigen des Strukturbauteils 1 aufgebracht wird, vollständig von der Hülse 5 aufgenommen, ohne dabei die Querschnittsform des Profilsegmentes 2 zu beeinträchtigen und die Oberseite 19 zur Unterseite 20 zu drücken.

In der Figur 3 ist die erste Ausführungsform gezeigt, nach welcher das Verstärkungselement 6 gemäß der Figur 2 ausgebildet ist, so dass es Formschlussmittel zur wenigstens teilweisen Aufnahme der Mantelflächen 11 der Hülsen 5 aufweist.

In der Figur 4 ist eine alternative Ausführungsform gezeigt, bei welcher das Verstärkungselement 6 keine Formschlussmittel 10 aufweist, so dass das Verstärkungselement 6 lediglich an den Mantelflächen 11 der Hülsen 5 anliegt und die Hülsen bei dem Auftritt eines Aufpralls hauptsächlich in Richtung von der Aufprallfläche 16 weg verschiebt.

Die Figur 5 zeigt dabei eine mögliche Variante, bei welcher das Verstärkungselement 6 als Kastenprofil ausgebildet ist, welches mittels einer Schweißnaht 26 innerhalb des Profilsegmentes 2 festgelegt ist.

Die Figur 6 zeigt einen montierten Strukturrahmen 21, welcher über vier Strukturbauteile 1 mit jeweils einem Verstärkungselement 6 verfügt.

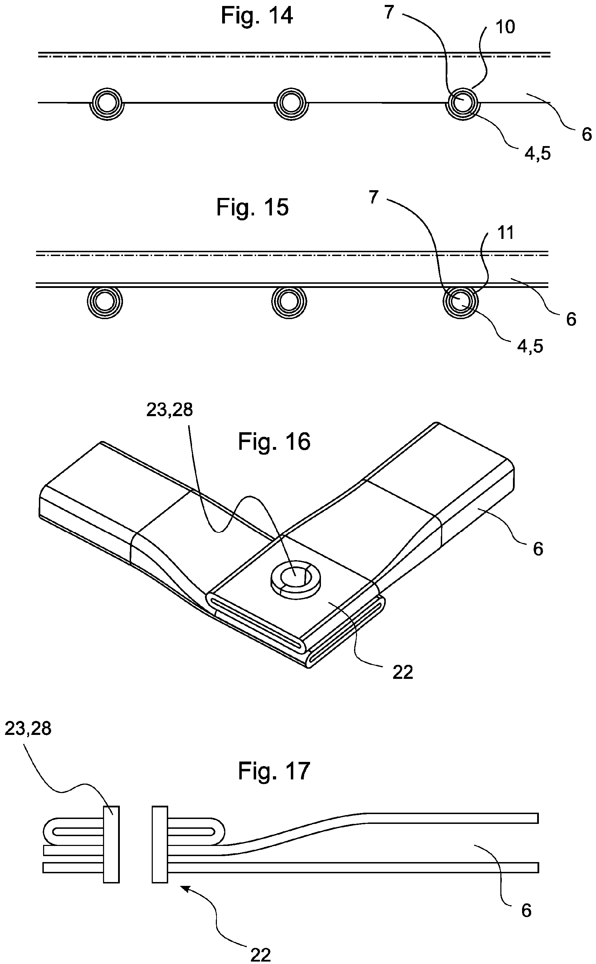

Eine mögliche Aneinanderfügung der Verstärkungselemente 6 in den Eckbereichen ist in den Figuren 16 und 17 dargestellt, in welchen die Rohrenden 22 der jeweiligen Verstärkungselemente 6 sichtbar sind. Die Rohrenden 22 sind hier verprägt ausgebildet, so dass diese gegenüber dem übrigen Teil des Verstärkungselementes 6 abgeflacht sind. Zudem ist hier eine Bohrung zur Aufnahme eines Pins 28 vorgesehen, der ein Verbindungsmittel 23 zum Verbinden der Rohrenden 22 bildet.

In den Figuren 7, 8 und 12 bis 15 sind weitere Varianten der Erfindung dargestellt. Bei der Variante gemäß Figur 7 ist ein Kastenprofil vorgesehen, welches mit mehreren Formschlussmitteln in Form von Ausnehmungen 17 bzw. Einbuchtungen versehen ist, um mehrere Hülsen 5 wenigstens teilweise darin aufzunehmen.

In der Figur 8 ist eine Variante der Erfindung gezeigt, bei welcher das Verstärkungselement 6 als C-Profil ausgebildet ist, wobei die Ausnehmungen 17 stärker im Vergleich zur Figur 7 stärker ausgeprägt sind, und einen größeren Umfang der Mantelfläche 11 der Hülsen 5 darin aufnehmen. Die Ausnehmungen 17 oder Einbuchtungen können, beispielsweise bis zu einem vollen Halbkreis beschreiben.

In der Figur 9 ist eine seitliche Schnittansicht der Erfindung gezeigt, wobei darin ein Kastenprofil als Verstärkungselement 6 Verwendung findet. Hierbei wird im Vergleich zur Variante gemäß der Figuren 1 und 5 die Hülse 5 von der Unterseite 20 her in den horizontalen Schenkel 9 des Profilsegmentes 2 eingefügt.

Im Vergleich dazu ist in der Figur 10 anstelle des Kastenprofils ein C-Profil für das Verstärkungselement 6 vorgesehen.

In der Figur 11 wird anstelle eines herkömmlichen C-Profils ein C-Profil mit Durchzug zur Herstellung des Verstärkungselementes 6 verwendet.

Die Figuren 12 und 13 zeigen Detailansichten der Ausführungsformen gemäß der Figuren 7 und 8, bei denen besonders gut die unterschiedliche Ausprägung der Formschlussmittel 10 erkennbar ist.

Die Figur 14 ist eine Draufsicht, die der Figur 13 entspricht. Die Figur 15 ist eine Draufsicht auf eine Anordnung von einem Verstärkungselement 6 und drei Hülsen 5, wobei das Verstärkungselement 6 keine Formschlussmittel 10 aufweist und nur seitlich an den Mantelflächen 11 der Hülsen 5 anliegt.

Es versteht sich, dass die einzelnen Merkmale der hier dargestellten Varianten untereinander austauschbar und auf andere Ausführungsbeispiele anwendbar sind, so dass sich aus den hier dargestellten Eigenschaften die Erfindung auch Unterkombinationen ergeben, die im Rahmen der Erfindung mit erfasst sind.

Der grundsätzliche Gedanke der Erfindung liegt darin, zur Verstärkung des Strukturprofils ein Verstärkungsprofil im Form des Verstärkungselementes 6 vorzusehen, welches gegenüber einer Aufdickung des Strukturprofils lokal dort wirken kann, wo ein Aufprall stattfindet. Das Verstärkungselement kann sowohl im Längs- als auch im Querbereich eines Strukturrahmens 21 vorgesehen sein und ist vornehmlich aus hochfestem Stahl gefertigt.

Die Funktion beruht im Wesentlichen darauf, dass sich das Verstärkungselement 6 an den umliegenden Hülsen 5 der Fahrzeugbefestigung abstützt und dadurch die lokale Beaufschlagung, bspw. eines Pfahl-Prüfkörpers auf einen größeren Bereich des Strukturrahmens verteilt. Dabei beruht die Erhöhung der Gegenkraft auf der Biegung des Verstärkungselementes 6, wenn das Verstärkungselement ohne Befestigung auf den Schraubhülsen aufliegt und somit ein Längenausgleich möglich ist. Wenn das Verstärkungselement 6 in seiner Länge vergrößert wird und im Bereich der Hülsen 5 Formschlussmittel 10 erhält, so entstehen Hinterschnitte, die im Fall der Intrusion eines Pfahl-Prüfkörpers das Schieben des Verstärkungselementes blockieren würden, wodurch sich die Kraftaufnahme des Verstärkungselementes 6 bei gleicher Intrusion durch bessere Verteilung der eingeleiteten Kraft erhöht. Um die Wirkung der Lastverteilung weiter zu erhöhen, sind die Verstärkungselemente an den Rahmenecken miteinander in der oben angegebenen Weise verbunden, so dass eine an den Rahmenecken auftretende Kraft zusätzlich von dem etwa rechtwinklig dazu stehenden Rahmenteil aufgenommen werden kann.

Der Strukturrahmen 21 kann Teil eines Batteriekastens sein, der in der Figur 5 angedeutet ist. Der Batteriekasten weist dabei auch einen Deckel 25 auf, der auf dem Strukturrahmen 21 aufliegt und über eine Dichtung 24 abgedichtet ist.

### Bezugszeichenliste

- 1: Strukturbauteil
- 2: Profilsegment
- 3: Befestigungsabschnitt
- 4: Befestigungsmittel
- 5: Hülse
- 6: Verstärkungselement
- 7: Durchgangsbohrung
- 8: vertikaler Schenkel
- 9: horizontaler Schenkel
- 10: Formschlussmittel
- 11: Mantelfläche
- 12: Zusatzprofil
- 13: untere Lasche
- 14: obere Lasche
- 15: Klemmbereich
- 16: Aufprallfläche
- 17: Ausnehmungen
- 18: Längsrichtung
- 19: Oberseite
- 20: Unterseite
- 21: Strukturrahmen
- 22: Rohrende
- 23: Verbindungsmittel
- 24: Dichtung
- 25: Deckel
- 26: Schweißnaht
- 28: Pin

## Patentansprüche

1. Strukturbauteil (1) für ein Kraftfahrzeug mit einem wenigstens teilweise hohl ausgebildeten Profilsegment (2), welches über wenigstens zwei in einem Befestigungsabschnitt (3) angeordnete Befestigungsmittel (4) mit einer Kraftfahrzeugkarosserie verbindbar ist, wobei in dem Befestigungsabschnitt (3) zwischen einer seitlichen Aufprallfläche (16) und den Befestigungsmitteln (4) ein Verstärkungselement (6) angeordnet ist, das sich in Längsrichtung (18) des Profilsegmentes (2) erstreckt und welches sich bei einem Aufprall von der Aufprallfläche (16) her an die Befestigungsmittel (4) unter Aufnahme der Aufprallenergie wenigstens teilweise über eine Verschiebung der Befestigungsmittel (4) seitlich anlegt, **dadurch gekennzeichnet, dass** die Befestigungsmittel (4) als Hülsen (5) ausgebildet sind, die sich zwischen einer Oberseite (19) und einer Unterseite (20) des Befestigungsabschnittes (3) erstrecken und in dem Profilsegment (2) im Wesentlichen formschlüssig gegen seitliches Verschieben gehalten sind.

2. Strukturbauteil (1) nach Anspruch 1, **dadurch gekennzeichnet, dass** das Verstärkungselement (6) im montiertem Zustand in einem Klemmbereich (15) des Profilsegmentes (2) kraftschlüssig und/oder formschlüssig festgelegt ist.

3. Strukturbauteil (1) nach einem der vorhergehenden Ansprüche, **dadurch gekennzeichnet, dass** das Verstärkungselement (6) mit den Befestigungsmitteln (4) zusammenwirkende Formschlussmittel (10) aufweist, so dass im Falle eines Aufpralls und Eingriffs der Formschlussmittel (10) in die Befestigungsmittel (4) eine Kraftkomponente in Längsrichtung (18) des Profilsegmentes (2) auf die Befestigungsmittel (4) übertragbar ist.

4. Strukturbauteil (1) nach Anspruch 1, **dadurch gekennzeichnet, dass** die Formschlussmittel (10) Ausnehmungen (17), insbesondere kreissegmentartige Ausnehmungen (17) in dem Verstärkungselement (6) sind, die mit Mantelflächen (11) der Hülsen (5) korrespondieren.

5. Strukturbauteil (1) nach einem der vorhergehenden Ansprüche, **dadurch gekennzeichnet, dass** das Verstärkungselement (6) als Hohlprofil ausgebildet ist.

6. Strukturbauteil (1) nach den Ansprüchen 4 und 5, **dadurch gekennzeichnet, dass** die Ausnehmungen (17) der Formschlussmittel (10) durch Einbuchtungen in dem Hohlprofil gebildet sind.

7. Strukturbauteil (1) nach einem der vorhergehenden Ansprüche, **dadurch gekennzeichnet, dass** das Verstärkungselement (6) durch ein kaltgewalztes Profil, insbesondere aus einem hochfesten Stahl gebildet ist.

8. Strukturbauteil (1) nach einem der vorhergehenden Ansprüche 1 bis 7, **dadurch gekennzeichnet, dass** das Verstärkungselement (6) durch ein innenhochdruckgeformtes Profil gebildet ist.

9. Strukturbauteil (1) nach einem der vorhergehenden Ansprüche, **dadurch gekennzeichnet, dass** das das Verstärkungselement (6) abschreckgehärtet ist.

10. Strukturrahmen (21) mit wenigstens zwei endseitig aneinandergefügten Strukturbauteilen (1) nach einem der vorhergehenden Ansprüche, **dadurch gekennzeichnet, dass** die Verstärkungselemente (6) der Strukturbauteile (1) zum Übertragen von Kräften von einem Verstärkungselement (6) auf das andere Verstärkungselement (6) endseitig aneinandergefügt sind, wobei die Verstärkungselemente (6) endseitig verprägte Rohrenden (22) aufweisen und an den Rohrenden (22) aneinander gefügt sind.

11. Strukturrahmen (21) nach Anspruch 10, **dadurch gekennzeichnet, dass** die Verstärkungselemente (6) entgegen einem Verschieben der Rohrenden (22) zueinander, insbesondere entgegen einem Verschieben und Verdrehen der Rohrenden (22) zueinander, aneinander gefügt sind.

12. Strukturrahmen (21) nach Anspruch 11, **dadurch gekennzeichnet, dass** die Rohrenden (22) stoffschlüssig oder durch wenigstens ein Verbindungsmittel (23) aneinandergefügt sind.

13. Batteriekasten für ein Kraftfahrzeug mit einem Strukturrahmen (21) nach einem der Ansprüche 10 bis 12.

## Claims

1. Structural component (1) for a motor vehicle with a profile segment (2) of at least partially hollow configuration which can be connected to a motor vehicle body via at least two fastening means (4) which are arranged in a fastening section (3), a reinforcing element (6) being arranged in the fastening section (3) between a lateral impact face (16) and the fastening means (4), which reinforcing element (6) extends in the longitudinal direction (18) of the profile segment (2), and which reinforcing element (6), in the case of an impact from the impact face (16), bears laterally against the fastening means (4) with absorption of the impact energy at least partially via a displacement of the fastening means (4), **characterized in that** the fastening means (4) are configured as sleeves (5) which extend between an upper side (19) and a lower side (20) of the fastening section (3) and are held in the profile segment (2) in a substantially positively locking manner against lateral displacement.

2. Structure component (1) according to claim 1, **characterized in that**, in the mounted state, the reinforcing element (6) is fixed in a non-positive and/or positively locking manner in a clamping region (15) of the profile segment (2).

3. Structural component (1) according to either of the preceding claims, **characterized in that** the reinforcing element (6) has positively locking means (10) which interact with the fastening means (4), with the result that, in the case of an impact and engagement of the positively locking means (10) into the fastening means (4), a force component in the longitudinal direction (18) of the profile segment (2) can be transmitted to the fastening means (4).

4. Structural component (1) according to Claim 1, **characterized in that** the positively locking means (10) are recesses (17), in particular circular segment-like recesses (17) in the reinforcing element (6) which correspond with circumferential faces (11) of the sleeves (5).

5. Structural component (1) according to one of the preceding claims, **characterized in that** the reinforcing element (6) is configured as a hollow profile.

6. Structural component (1) according to Claims 4 and 5, **characterized in that** the recesses (17) of the positively locking means (10) are formed by way of indentations in the hollow profile.

7. Structural component (1) according to one of the preceding claims, **characterized in that** the reinforcing element (6) is formed by way of a cold-rolled profile, in particular made from a high-tensile steel.

8. Structural component (1) according to one of the preceding Claims 1 to 7, **characterized in that** the reinforcing element (6) is formed by way of a hydroformed profile.

9. Structural component (1) according to one of the preceding claims, **characterized in that** the reinforcing element (6) is quench-hardened.

10. Structural frame (21) with at least two structural components (1) according to one of the preceding claims which are joined to one another on the end side, **characterized in that** the reinforcing elements (6) of the structural component (1) are joined to one another on the end side in order to transmit forces from one reinforcing element (6) to the other reinforcing element (6), the reinforcing elements (6) having tube ends (22) which are stamped on the end side, and are joined to one another at the tube ends (22) .

11. Structural frame (21) according to Claim 10, **characterized in that** the reinforcing elements (6) are joined to one another in order to counter a displacement of the tube ends (22) with respect to one another, in particular in order to counter a displacement and rotation of the tube ends (22) with respect to one another.

12. Structural frame (21) according to Claim 11, **characterized in that** the tube ends (22) are joined to one another in an integrally joined manner or by way of at least one connecting means (23).

13. Battery box for a motor vehicle with a structural frame (21) according to one of Claims 10 to 12.

## Revendications

1. Composant structurel (1) destiné à un véhicule automobile, ledit composant structurel comprenant un segment profilé (2) au moins partiellement creux qui peut être relié à une carrosserie de véhicule automobile par le biais d'au moins deux moyens de fixation (4) disposés dans une portion de fixation (3), un élément de renforcement (6) étant disposé dans la portion de fixation (3) entre une surface d'impact latérale (16) et les moyens de fixation (4), lequel élément de renforcement s'étend dans la direction longitudinale (18) du segment profilé (2) et, en cas d'impact, vient en appui depuis la surface d'impact (16) sur les moyens de fixation (4) en absorbant l'énergie d'impact au moins partiellement latéralement par coulissement des moyens de fixation (4), **caractérisé en ce que** les moyens de fixation (4) sont conçus comme des manchons (5) qui s'étendent entre un côté supérieur (19) et un côté inférieur (20) de la portion de fixation (3) et sont maintenus dans le segment profilé (2) sensiblement par complémentarité de formes de manière à s'opposer au coulissement latéral.

2. Composant structurel (1) selon la revendication 1, **caractérisé en ce que** l'élément de renforcement (6) est fixé en force et/ou par complémentarité de formes, à l'état monté, dans une zone de serrage (15) du segment profilé (2).

3. Composant structurel (1) selon l'une des revendications précédentes, **caractérisé en ce que** l'élément de renforcement (6) comporte des moyens à complémentarité de formes (10) qui coopèrent avec les moyens de fixation (4) de sorte qu'en cas d'impact et d'engagement des moyens à complémentarité de formes (10) dans les moyens de fixation (4) une composante de force peut être transférée aux moyens de fixation (4) dans la direction longitudinale (18) du segment profilé (2) .

4. Composant structurel (1) selon la revendication 1, **caractérisé en ce que** les moyens à complémentarité de formes (10) sont des évidements (17), notamment des évidements (17) en forme de segment de cercle ménagés dans l'élément de renforcement (6), lesquels correspondent aux surfaces d'enveloppe (11) des manchons (5).

5. Composant structurel (1) selon l'une des revendications précédentes, **caractérisé en ce que** l'élément de renforcement (6) est réalisé sous forme de profilé creux.

6. Composant structurel (1) selon les revendications 4 et 5, **caractérisé en ce que** les évidements (17) des moyens à complémentarité de formes (10) sont formés dans le profilé creux par des creux.

7. Composant structurel (1) selon l'une des revendications précédentes, **caractérisé en ce que** l'élément de renforcement (6) est formé par un profilé laminé à froid, notamment en acier à haute résistance.

8. Composant structurel (1) selon l'une des revendications précédentes 1 à 7, **caractérisé en ce que** l'élément de renforcement (6) est formé par un profilé moulé à haute pression interne.

9. Composant structurel (1) selon l'une des revendications précédentes, **caractérisé en ce que** l'élément de renforcement (6) est durci par trempe.

10. Cadre structurel (21) comprenant au moins deux composants structurels (1) aboutés du côté extrémité selon l'une des revendications précédentes, **caractérisé en ce que** les éléments de renforcement (6) des composants structurels (1) sont aboutés du côté extrémité afin de transmettre des forces d'un élément de renforcement (6) à l'autre élément de renforcement (6), les éléments de renforcement (6) comportant des extrémités de tube (22) matricées du côté extrémité et étant aboutés aux extrémités de tube (22).

11. Cadre structurel (21) selon la revendication 10, **caractérisé en ce que** les éléments de renforcement (6) sont aboutés de manière à s'opposer au coulissement des extrémités de tube (22) l'une par rapport à l'autre, en particulier au coulissement et à la rotation des extrémités de tube (22) l'une par rapport à l'autre.

12. Cadre structurel (21) selon la revendication 11, **caractérisé en ce que** les extrémités de tube (22) sont aboutées par liaison de matière ou par le biais d'au moins un moyen de liaison (23).

13. Boîtier de batterie destiné à un véhicule automobile et comprenant un cadre structurel (21) selon l'une des revendications 10 à 12.
